Europäisches Patentamt

European Patent Office

Office européen des brevets

(11) Publication number: **0 314 223 B1**

# EUROPEAN PATENT SPECIFICATION

(45) Date of publication of patent specification: **08.04.92**   (51) Int. Cl.⁵: **C10G  1/00**

(21) Application number: **88202265.0**

(22) Date of filing: **11.10.88**

The file contains technical information submitted after the application was filed and not included in this specification

(54) **Process for the treatment of refinery sludges.**

(30) Priority: **29.10.87 IT 2244887**

(43) Date of publication of application:
**03.05.89 Bulletin  89/18**

(45) Publication of the grant of the patent:
**08.04.92 Bulletin  92/15**

(84) Designated Contracting States:
**AT BE CH DE ES FR GB GR LI LU NL SE**

(56) References cited:
**CA-A- 1 022 098
US-A- 3 696 021
US-A- 4 532 992**

(73) Proprietor: **ENIRICERCHE S.p.A.
Corso Venezia 16
I-20121 Milan(IT)**

(72) Inventor: **Faggian, Lucio
Via Kennedy 32
I-20097 San Donato Milanese Milan(IT)**
Inventor: **Ligabue, Mario
Via Soderini 47
I-20146 Milan(IT)**

(74) Representative: **Roggero, Sergio et al
Ing. Barzanò & Zanardo Milano S.p.A. Via
Borgonuovo 10
I-20121 Milano(IT)**

EP 0 314 223 B1

**Description**

The present invention relates to a process for the treatment of sludges deriving from refinery wastes.

In the refinery processes, e.g., crude oil distillation, catalytic cracking, reforming, alkylation and the like, aqueous waste streams are generated, which are usually submitted to primary treatments (decantation and clarification by flocculation), and to secondary treatments (active-sludge biological treatment).

The so-treated waste streams are then submitted to a thickening and filtration, with a residual product (refinery sludges) being generated, which is of from semi-solid to fluid consistency, and contains hydrocarbons, water, and a solid fraction, with this latter being mostly formed by carbonaceous residues, clay residues and biological sludges (Kirk-Othmer Encyclopedia of Chemical Technology, Third Edition, Vol. 24, pages 228-233).

Owing to the polluting nature of these refinery sludges, the disposal of them constitutes a technical problem which up to date has not found a completely satisfactory solution.

For example, treatments of oxidation and incineration of the same sludges were proposed; however, pollution, and furthermore require complex apparatuses, difficult to operate.

In US-A-3 696 021 refinery oil sludges are separated using light hydrocarbons into an oil-hydrocarbon phase and a water-solids phase. The solids slurried with water find utility as land fill.

The purpose of the present invention is overcoming the drawbacks relevant to the disposal of the refinery sludges, which affect the prior art.

In particular, according to the present invention, the refinery sludges, of from semi-solid to fluid consistency, containing hydrocarbons and water together with a solid fraction, are submitted to a treatment of extraction with carbon dioxide, under supercritic conditions, in order to separate a liquid fraction from a residual solid, and from the so-obtained liquid fraction an aqueous phase and a hydrocarbon phase are subsequently separated and recovered.

The extraction with fluids, under supercritic conditions, is a per se known technique. A review on such a subject is reported, e.g., in Kirk-Othmer, "Encyclopaedia of Chemical Technology", 3rd Ed. (1984), Supplement volume, John Wiley & Sons, at pages 872-893.

However, the matter of fact that, by operating according to the present invention, it is possible to treat such a complex mixture as a refinery sludge is, and to obtain a sharp separation between solid and liquid constituents, is surprising. In particular, the characteristics of the so-separated solid fraction are such, as to make said solid fraction suitable for being directly dumped to a landfill. Furthermore, the recovered aqueous phase can be recycled to the refinery processing facility, in that it is compatible with the latter, because to it no components other than any already present components were added. Finally, the recovered hydrocarbon phase can be sent to the refinery slops, in that it can be pumped at room temperature, has a high heat value, and is free from decantable solids.

As previously said, the refinery sludges which are treated according to the process of the present invention are products of from semi-solid to fluid consistency, which contain hydrocarbons, water and a solid fraction. A typical sludge coming from the waste streams of a complete-cycle refinery, after the thickening and filtration treatments, contains about 5-25% by weight of hydrocarbons and about 5-20% by weight of solids, with the balance being water. According to the process of the present invention, such a sludge, or similar sludges, are submitted to a treatment of extraction with carbon dioxide, by operating under super-critic conditions.

By the term "supercritic conditions", it is herein meant that the process is carried out at temperatures higher than the critic temperature value ($31°C$), and under pressures equal to, or higher than, the critic pressure (73.8 bar) of carbon dioxide. The pressure is usually selected as a function of the operating temperature, so that the density of the supercritic carbon dioxide is slightly lower than the density of the sludges submitted to the extraction. In particular, the range of temperatures at which the process can be carried out, is of from $32°$ to $120°C$, and is preferably of from $45°$ to $90°C$, and the pressures are correspondingly comprised within the range of from 73.8 to 500 bar, and preferably of from 150 to 350 bar.

In practice, the refinery sludges are charged to a suitable extraction vessel, and through the sludges carbon dioxide under super-critic conditions is made flow. In this way, carbon dioxide extracts water and the hydrocarbons, and the extraction vessel leaving stream is sent to a separation vessel, operating under conditions different from supercritic conditions, in which carbon dioxide evaporates and water and hydrocarbons are separated in the liquid state. Inside the separation vessel, the phase separation occurs spontaneously, and an aqueous phase and a hydrocarbon phase are separated and recovered.

In some cases, also the use of dragging agents, favouring the separation of the liquid phases from the solid phase, may prove useful, and said dragging agents can be selected from the class of alcohols, esters, and ketones.

The process can be carried out on a single extraction vessel, or on a plurality of extraction vessels connected in series to each other, or on a mixed series/parallel system. In any case, the separation of a directly disposable solid, as well as of an aqueous phase and of a hydrocarbon phase, recyclable to the same refinery, is accomplished.

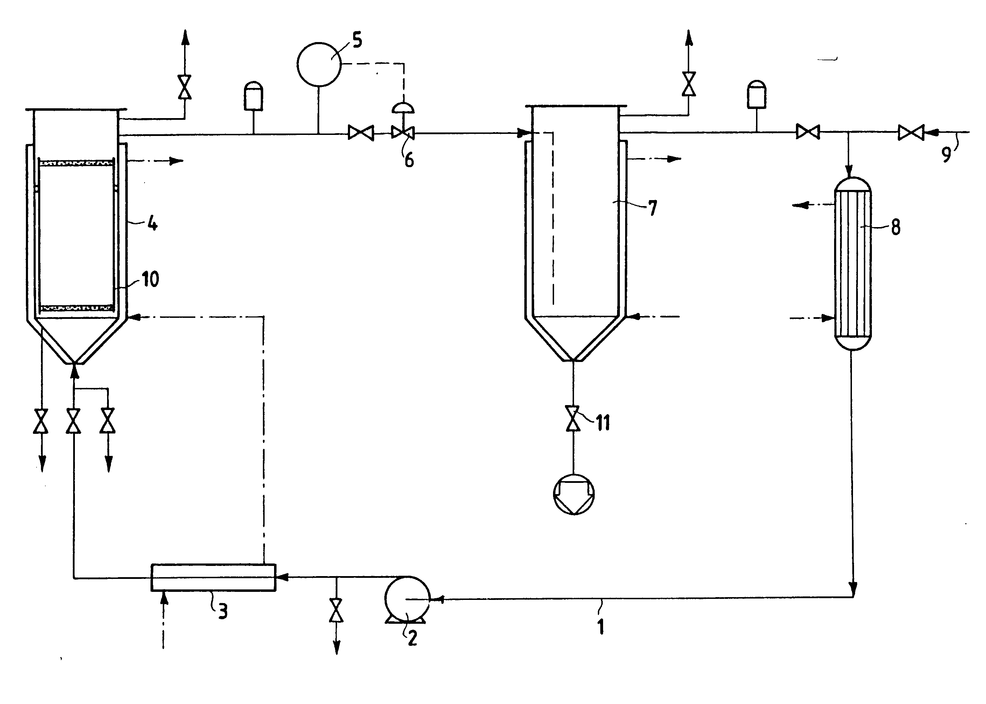

In the following experimental example, reported for illustrative and non-limitative purposes, the laboratory equipment was used, which is schematically shown in Figure 1 of the hereto attached drawing table.

More particularly, referring to said figure 1, the equipment comprises a refrigerating system for the condensation of carbon dioxide inside the heat exchanger (8). Liquid carbon dioxide is pumped through the line (1) and the membrane pump (2), to the pre-heater (3), and then to the extraction vessel (4). The temperature in (3) and (4) is maintained constant at a same value, by circulating water coming from a temperature-controlled bath. Furthermore, the pressure inside (4) is maintained constant at the desired value by means of the pressure regulator (5) and the actuation valve (6). Carbon dioxide, containing the products extracted from the sludges charged to (4) and outflowing through the valve (6), exits the supercritic range inside the separation vessel (7), inside which carbon dioxide evaporates and is subsequently condensed in (8), in order to run again through the already disclosed cycle.

The extract is recovered from the separation vessel (7) through the valve (11). Any carbon dioxide possibly necessary for replenishment purposes is fed through the line (9). The separation vessel (7) is provided with two diametrically opposite glass windows, in order to visually check the liquid level. Said liquid level is maintained constant by acting on the temperature of water coming from a second temperature-controlled bath. The pressure inside (7) is maintained constant by means of a pressure switch, which controls the refrigerating cycle. Inside the extraction vessel (4) a cylindrical vessel (10) is placed, tightly sealed relatively to the inner cylindrical wall of the extraction vessel, and having its cover and its floor wall made from sintered, porous steel, inside which the sludges are charged.

Example

To the cylindrical vessel (10) (Figure 1), placed inside the extraction vessel, 188.8 kg is charged of sludges coming from the waste streams of a complete-cycle refinery, after the customary primary and secondary treatments.

The composition of such sludges is as follows:

| - hydrocarbons : | 24.2% by weight |
|---|---|
| - water : | 63.9% by weight |
| - solid matter : | 11.9% by weight. |

The extraction vessel (4) is set at the controlled temperature of 45°C, and to it carbon dioxide is fed at a flow rate of 1.5 kg/hour, with the pressure inside the extraction vessel being maintained at the value of 150 bar.

One hour later, the extraction pressure is increased up to 200 bar, and the temperature is increased up to 60°C.

After 4 hours from the beginning of the extraction, the pressure is furthermore increased to 250 bar, and the temperature is increase to 70°C.

These conditions are maintained until the extraction of water and hydrocarbons is complete (after a further 20 hours).

At 1-hour intervals, during the course of the whole operation, the extracted product is discharged from the separation vessel (7), by means of the valve (11), into a graduated vessel, and the amount of the separated products is measured after the spontaneous separation of the aqueous phase and of the hydrocarbon phase.

The extraction of water and of the hydrocarbons takes place simultaneously throughout the course of the operation. When the extraction is ended, the residue (22.4 g) inside the extraction vessel shows to be a black, perfectly dried, solid. The extract results to be constituted by an opalescent aqueous phase (120.6 g) and a supernatant hydrocarbon phase(45.8g).The hydrocarbon phase does not contain any decantable solids.

The solid residue is characterized on considering the possibility of a dumping to a landfill. It results to be non-putrescible, perfectly suitable for shovelling, and to have an eluate, according to such methods as provided by the Delibera Comitato Interministeriale (Inter-Ministry Committee Resolution) of June l6th, 1986 (Gazette No. 183 Aug. 8th, 1986), which contains such products as listed under items 9 through 20, 24, 25 and 27 of the List of Toxic Substances enclosed with EEC Directive Nr. 78/319 of March 20th, 1978, in amounts smaller than 1/100th of the respective LC'S (LC = limit concentration, as defined by DPR (Decree of the President of the Republic) of Nov. 24th, 1981, Nr. 927), and therefore suitable for being dumped to second category landfills of B type.

## Claims

1. Process for the treatment of refinery sludges, of from semi-solid to fluid consistency, containing hydrocarbons and water together with a solid fraction, characterized in that said sludges are submitted to a treatment of extraction with carbon dioxide, under supercritic conditions, in order to separate a liquid fraction from a residual solid, and from the so-obtained liquid fraction an aqueous phase and a hydrocarbon phase are subsequently separated and recovered.

2. Process according to claim 1, characterized in that the extraction is carried out at temperatures comprised within the range of from 32° to 120°C, and under pressures comprised within the range of from 73.8 to 500 bar.

3. Process according to claim 2, characterized in that said extraction temperatures are comprised within the range of from 45° to 90°C, and said pressures are comprised within the range of from 150 to 350 bar.

4. Process according to claim 1, characterized in that said extraction is carried out in the presence of a dragging agent selected from alcohols, esters, and ketones.

## Revendications

1. Procédé de traitement de boues de raffinerie, de consistance semi-solide à fluide, contenant des hydrocarbures et de l'eau ainsi qu'une fraction solide, **caractérisé** en ce que l'on soumet lesdites boues à un traitement d'extraction avec du dioxyde de carbone, dans des conditions super-critiques, afin de séparer une fraction liquide d'un solide résiduel, et sépare et récupère ensuite, à partir de la fraction liquide ainsi obtenue, une phase aqueuse et une phase hydrocarbure.

2. Procédé selon la revendication 1, **caractérisé** en ce que l'on effectue l'extraction à une température comprise dans l'intervalle allant de 32°C à 120°C et sous une pression comprise dans l'intervalle allant de 73,8 à 500 bars.

3. Procédé selon la revendication 2, **caractérisé** en ce que ladite température d'extraction est comprise dans l'intervalle allant de 45° à 90°C et ladite pression est comprise dans l'intervalle allant de 150 à 350 bars.

4. Procédé selon la revendication 1, **caractérisé** en ce que l'on effectue ladite extraction en présence d'un agent d'entraînement choisi parmi les alcools, les esters et les cétones.

## Patentansprüche

1. Verfahren, zur Behandlung von Raffinerieschlämmen mit halbfester bis flüssiger Konsistenz, die Kohlenwasserstoffe und Wasser zusammen mit einer festen Fraktion enthalten, dadurch gekennzeichnet, daß diese Schlämme einer Extraktionsbehandlung mit Kohlendioxid unter überkritischen Bedingungen unterworfen werden, um eine flüssige Fraktion von einem Feststoffrückstand abzutrennen, worauf aus der so erhaltenen flüssigen Fraktion eine wäßrige Phase und eine Kohlenwasserstoffphase abgetrennt und gewonnen werden.

2. Verfahren nach Anspruch 1, dadurch gekennzeichnet, daß die Extraktion bei Temperaturen im Bereich von 32 bis 120°C und unter Drücken im Bereich von 73,8 bis 500 bar ausgeführt wird.

3. Verfahren nach Anspruch 2, dadurch gekennzeichnet, daß die Extraktionstemperaturen im Bereich von 45 bis 90° und die Drücke im Bereich von 150 bis 350 bar gehalten werden.

4. Verfahren nach Anspruch 1, dadurch gekennzeichnet, daß die Extraction in Anwesenheit eines unter Alkoholen, Estern and Ketonen ausgewählten Schleppmittels ausgeführt wird.